(19) Europäisches Patentamt
European Patent Office
Office européen des brevets

(11) **EP 4 748 888 A1**

(12) **EUROPEAN PATENT APPLICATION**
published in accordance with Art. 153(4) EPC

(43) Date of publication:
**27.05.2026 Bulletin 2026/22**

(21) Application number: **24842887.2**

(22) Date of filing: **20.06.2024**

(51) International Patent Classification (IPC):
*C08L 69/00* (2006.01)   *C08J 5/18* (2006.01)
*C08K 3/04* (2006.01)   *C08K 5/3477* (2006.01)

(52) Cooperative Patent Classification (CPC):
**C08J 5/18; C08K 3/04; C08K 5/3477;**
**C08K 5/3492; C08L 69/00**

(86) International application number:
**PCT/JP2024/022342**

(87) International publication number:
**WO 2025/018091 (23.01.2025 Gazette 2025/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **19.07.2023 JP 2023117431**

(71) Applicant: **TEIJIN LIMITED**
**Kita-ku,**
**Osaka-shi,**
**Osaka 530-0005 (JP)**

(72) Inventors:
• **YAHATA, Tatsuya**
  **Osaka-shi, Osaka 530-0005 (JP)**
• **IBUSUKI, Shun**
  **Osaka-shi, Osaka 530-0005 (JP)**
• **FUJIMOTO, Daiki**
  **Osaka-shi, Osaka 530-0005 (JP)**

(74) Representative: **Kraus & Lederer PartGmbB**
**Thomas-Wimmer-Ring 15**
**80539 München (DE)**

(54) **INSULATING FLAME-RETARDANT RESIN COMPOSITION, MOLDED ARTICLE, AND SHEET**

(57)   The present invention provides: an insulating flame-retardant resin composition excellent in terms of flame retardancy, tracking resistance, mold releasability, and thermal stability; a molded article; and a sheet. This flame-retardant resin composition is characterized by comprising (A) 100 parts by weight of a polycarbonate resin (A component) and (B) 0.5-1.8 parts by weight of a flame retardant (B component), the flame retardant being a nitrogen-containing compound.

EP 4 748 888 A1

**Description**

TECHNICAL FIELD

The present invention relates to an insulating flame-retardant resin composition which are excellent in flame retardancy, tracking resistance, mold releasability and thermal stability, a molded article and a sheet.

BACKGROUND ART

Polycarbonate resins have excellent mechanical properties, and are therefore widely used in automotive and battery peripheral parts. In recent years, the development of batteries and electric vehicles has been active in order to reduce $CO_2$ and, from the viewpoint of the safety, there is a growing demand for materials which are flame retardant and have excellent tracking resistance capable of withstanding high voltages. There has conventionally been carried out, as the method for improving the flame retardance, a method in which resin molded articles are mixed with a flame retardant to impart the flame retardancy. To improve the flame retardancy of a polycarbonate resin, for example, there has been used a method of mixing with a large amount of an oligomer or a polymer of a carbonate derivative of brominated bisphenol A. However, the addition of a large amount of a flame retardant causes many problems, such as the generation of halogenated gas which is harmful to humans during combustion. Therefore, there is demand for a flame-retardant resin composition using a flame retardant which does not generate halogen-containing gas.

Patent Literature 1 discloses a thermoplastic resin composition including, as the flame retardant, ammonium polyphosphate, a phosphorus-containing compound and a nitrogen-containing cyclic compound. However, although a large amount of ammonium polyphosphate and a nitrogen-containing cyclic compound are used in combination as the flame retardant, there is a problem in that the flame retardancy is insufficient. There is no mention of tracking resistance. Patent Literatures 2 and 3 disclose flame-retardant resin compositions comprising a polycarbonate resin, a low-molecular-weight phosphate ester compound as the flame retardant, and a fibrous material. However, when using, as the flame retardant, a low-molecular-weight phosphate ester compound such as an aromatic diphosphate, there is a need to add a large amount to impart the flame retardancy, and char formation is also promoted, resulting in problems such as increased electrical conductivity and deteriorated tracking resistance.

[CITATION LIST]

[PATENT LITERATURE]

[PTL 1] JP 2000-154322 A
[PTL 2] JP 2002-30209 A
[PTL 3] JP 2002-226694 A

SUMMARY

[TECHNICAL PROBLEM]

In view of the above, an object of the present invention is to provide an insulating flame-retardant resin composition which are excellent in flame retardancy, tracking resistance, mold releasability and thermal stability, a molded article and a sheet.

[SOLUTION TO PROBLEM]

According to the present invention, the above problems are solved by the following configuration.

1. An insulating flame-retardant resin composition comprising 0.5 to 1.8 parts by weight of (B) a flame retardant (component B) relative to 100 parts by weight of (A) a polycarbonate resin (component A), wherein the flame retardant is a nitrogen-containing compound.
2. The insulating flame-retardant resin composition according to item 1, wherein the nitrogen-containing compound is melamine cyanurate.
3. The insulating flame-retardant resin composition according to item 1 or 2, further comprising 0.05 to 1.8 parts by weight of (C) carbon black (component C) relative to 100 parts by weight of the component A.

4. The insulating flame-retardant resin composition according to any one of items 1 to 3, wherein the component A has a viscosity-average molecular weight of 17,000 to 25,500.

5. The insulating flame-retardant resin composition according to any one of items 1 to 4, wherein the component B is a nitrogen-containing compound in which the proportion of particles having a particle size of 50 μm or more as measured by the Microtrac method is less than 0.1%.

6. A molded article or sheet obtained by molding the insulating flame-retardant resin composition according to any one of items 1 to 5.

[ADVANTAGEOUS EFFECTS OF INVENTION]

The insulating flame-retardant resin composition of the present invention is excellent in flame retardancy, tracking resistance, mold releasability and thermal stability, and is therefore useful for various uses, including electrical and electronic parts, automotive and battery peripheral parts, and other various uses. In particular, the present invention provides a molded article which is extremely useful for electrical and electronic parts, automotive and battery peripheral parts, and the industrial effects of the present invention are extremely great.

DESCRIPTION OF EMBODIMENTS

The present invention will be described in further detail below.

<Component A: Polycarbonate resin>

The polycarbonate resin to be used in the present invention is obtained by reacting a dihydric phenol with a carbonate precursor. Examples of the reaction method include an interfacial polycondensation method, a melt transesterification method, a solid phase transesterification of carbonate prepolymers, and a ring-opening polymerization method of cyclic carbonate compounds.

Typical examples of the dihydric phenol to be used herein include hydroquinone, resorcinol, 4,4'-dihydroxydiphenyl, bis(4-hydroxyphenyl)methane, bis{(4-hydroxy-3,5-dimethyl)phenyl}methane, 1,1-bis(4-hydroxyphenyl)ethane, 1,1-bis(4-hydroxyphenyl)-1-phenylethane, 2,2-bis(4-hydroxyphenyl)propane (commonly known as bisphenol A), 2,2-bis{(4-hydroxy-3-methyl)phenyl } propane, 2,2-bis{(4-hydroxy-3,5-dimethyl)phenyl}propane, 2,2-bis{(3-isopropyl-4-hydroxy)phenyl}propane, 2,2-bis{(4-hydroxy-3-phenyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,4-bis(4-hydroxyphenyl)-2-methylbutane, 2,2-bis(4-hydroxyphenyl)pentane, 2,2-bis(4-hydroxyphenyl)-4-methylpentane, 1,1-bis(4-hydroxyphenyl)cyclohexane, 1,1-bis(4-hydroxyphenyl)-4-isopropylcyclohexane, 1,1-bis(4-hydroxyphenyl)-3,3,5-trimethylcyclohexane, 9,9-bis(4-hydroxyphenyl)fluorene, 9,9-bis{(4-hydroxy-3-methyl)phenyl} fluorene, α,α'-bis(4-hydroxyphenyl)-o-diisopropylbenzene, α,α'-bis(4-hydroxyphenyl)-m-diisopropylbenzene, α,α'-bis(4-hydroxyphenyl)-p-diisopropylbenzene, 1,3-bis(4-hydroxyphenyl)-5,7-dimethyladamantane, 4,4'-dihydroxydiphenyl sulfone, 4,4'-dihydroxydiphenyls sulfoxide, 4,4'-dihydroxydiphenyl sulfide, 4,4'-dihydroxydiphenyl ketone, 4,4'-dihydroxydiphenyl ether and 4,4'-dihydroxydiphenyl ester, and these can be used alone or in combination of two or more thereof.

Of these, preferred are homopolymers or copolymers obtained from at least one bisphenol selected from the group consisting of bisphenol A, 2,2-bis{(4-hydroxy-3-methyl)phenyl}propane, 2,2-bis(4-hydroxyphenyl)butane, 2,2-bis(4-hydroxyphenyl)-3-methylbutane, 2,2-bis(4-hydroxyphenyl)-3,3-dimethylbutane, 2,2-bis(4-hydroxyphenyl)-4-methylpentane, 1,1-bis(4-hydroxyphenyl)-3,3,5-trimethylcyclohexane and α,α'-bis(4-hydroxyphenyl)-m-diisopropylbenzene, and homopolymers of bisphenol A and copolymers of 1,1-bis(4-hydroxyphenyl)-3,3,5-trimethylcyclohexane with bisphenol A, 2,2-bis{(4-hydroxy-3-methyl)phenyl}propane or α,α'-bis(4-hydroxyphenyl)-m-diisopropylbenzene are particularly preferably used.

Carbonyl halide, carbonate ester or haloformate is used as the carbonate precursor, and specific examples thereof include phosgene, diphenyl carbonate, and dihaloformate of dihydric phenol.

When the polycarbonate resin is produced by reacting the dihydric phenol with the carbonate precursor by the interfacial polycondensation method or the melt transesterification method, a catalyst, a terminal terminator, an antioxidant for the dihydric phenol and the like may be used as necessary. The polycarbonate resin may be a branched polycarbonate resin obtained by copolymerizing a trifunctional or higher polyfunctional aromatic compound, or a polyester carbonate resin obtained by copolymerizing an aromatic or aliphatic difunctional carboxylic acid, or may be a mixture in which two or more of the resulting polycarbonate resins are mixed.

The reaction modes of the methods for producing the polycarbonate resin of the present invention, such as an interfacial polymerization method, a melt transesterification method, a solid-phase transesterification method of a carbonate prepolymer, and a ring-opening polymerization method of a cyclic carbonate compound, are well known in various literature and patent publications.

When the viscosity-average molecular weight of the polycarbonate resin is less than 17,000, cracking may occur during molding, and when it exceeds 25,500, the fluidity may deteriorate and moldability may deteriorate. Therefore, the viscosity-average molecular weight is preferably 17,000 to 25,500, more preferably 17,000 to 25,400, and still more preferably 17,300 to 25,000.

Two or more polycarbonate resins may be mixed. In this case, it is of course possible to mix a polycarbonate resin having a viscosity-average molecular weight outside the above range.

The viscosity-average molecular weight in the present invention is determined by inserting a specific viscosity ($\eta_{SP}$) determined from a solution prepared by dissolving 0.7 g of a polycarbonate resin in 100 ml of methylene chloride at 20°C into the following equation:

$$\eta_{S} P/c = [\eta] + 0.45 \times [\eta]^{2} c$$

(where [η] is an intrinsic viscosity)

$$[\eta] = 1.23 \times 10^{-4} M^{0.83}$$

$$c = 0.7$$

<Component B: Flame retardant>

The flame retardant to be used as the component B of the present invention is a nitrogen-containing compound, and is preferably melamine cyanurate. Specific examples of melamine cyanurate include MC25 (manufactured by BASF Corporation, D50: 1.5 μm, D99: 11.6 μm), MC6000 (manufactured by Nissan Chemical Corporation, D50: 1.8 μm, D99: 8.3 μm), MC4000 (manufactured by Nissan Chemical Corporation, D50: 14.1 μm, D99: 58.8 μm), MC7000 (manufactured by Nissan Chemical Corporation, D50: 1.9 μm, D99: 3.0 μm), MC-20S (manufactured by Sakai Chemical Industry Co., Ltd., D50: 3.2 μm, D99: 10.1 μm) and MC-2010N (manufactured by Sakai Chemical Industry Co., Ltd., D50: 3.1 μm, D99:9.9 μm). D50 and D99 were measured by a laser diffraction/scattering method using SALD-3000S manufactured by SHIMADZU Corporation. D99 is preferably 1 μm to 10 μm, more preferably 3 μm to 9 μm, and still more preferably 5 μm to 9 μm. When D99 is within this range, a better balance among flame retardancy, tracking resistance and sheet mass productivity may be achieved. These compounds can be used alone or in combination with other flame retardants. When flame retardants other than a nitrogen-containing compound are included as the flame retardant, it becomes difficult to achieve both flame retardancy and tracking resistance.

The component B is preferably a nitrogen-containing compound in which the proportion of particles having a particle size of 50 μm or more as measured by the Microtrac method is less than 0.1%, and more preferably less than 0.05%. When the proportion is less than 0.1%, the proportion of small-diameter particles may increase, it is possible to efficiently exhibit flame retardancy by a small amount of particles. The lower limit of the proportion is preferably 0%.

The content of the component B is 0.5 to 1.8 parts by weight, preferably 0.55 to 1.79 parts by weight, more preferably 0.6 to 1.78 parts by weight, and still more preferably 0.6 to 1.3 parts by weight, relative to 100 parts by weight of the component A. When the content of the component B is less than 0.5 part by weight, the flame retardancy may deteriorate, and when it exceeds 1.8 parts by weight, the flame retardancy and thermal stability may deteriorate.

<Component C: Carbon black>

There is no particular limitation on the method of adding carbon black to be used in the present invention and, from the viewpoint of the workability, it is preferable to use carbon black obtained by kneading in advance with a polycarbonate resin and forming the kneaded mixture into a masterbatch. The kneading method is not particularly limited, but kneading using an extruder is preferred.

The content of the component C is preferably 0.05 to 1.8 parts by weight, more preferably 0.06 to 1.79 parts by weight, still more preferably 0.07 to 1.78 parts by weight, particularly preferably 0.08 to 1.77 parts by weight, and most preferably 0.08 to 1.6 parts by weight, relative to 100 parts by weight of the component A. When the content of the component C is less than 0.05 parts by weight, it may not be possible to provide hiding power due to the molded article, and when it exceeds 1.8 parts by weight, the electrical conductivity may increase, leading to deterioration of the tracking resistance.

<Regarding Method for Producing Insulating Flame-Retardant Resin Composition>

The insulating flame-retardant resin composition of the present invention can be produced by any method. For example, the composition is produced by kneading in a single-screw or multi-screw extruder. The composition can be prepared by feeding a polycarbonate resin as the component A, a flame retardant as the component B, and optionally other components into an extruder using a feeder. The insulating flame-retardant resin composition thus obtained can be formed into molded articles or sheets to be used for automobile and battery peripheral parts by various known methods, such as an injection molding method and a sheet molding method.

[EXAMPLES]

The insulating flame-retardant resin composition of the present invention will be specifically described below with reference to Examples. In the following measurement conditions and Examples, "parts" respectively represent "parts by weight".

<Materials Used>

<Component A: Polycarbonate resin>

A-1: L-1250WQ (product name) (manufactured by TEIJIN LIMITED, viscosity-average molecular weight of 25,100)
A-2: L-1250WP (product name) (manufactured by TEIJIN LIMITED, viscosity-average molecular weight of 23,800)
A-3: L-1225WX (product name) (manufactured by TEIJIN LIMITED, viscosity-average molecular weight of 19,700)

<Component B: Flame retardant>

B-1: MC25 (product name) (manufactured by BASF Corporation, melamine cyanurate, D50: 1.5 $\mu$m, D99: 11.6 $\mu$m, the proportion of particles having a particle size of 50 $\mu$m or more as measured by the Microtrack method is less than 0.1%)
B-2 (Comparative Example): PX-200 (product name) (manufactured by Daihachi Chemical Industry Co., Ltd., condensed phosphate ester)
B-3: MC6000 (product name) (manufactured by Nissan Chemical Corporation, melamine cyanurate, D50: 1.8 $\mu$m, D99: 8.3 $\mu$m, the proportion of particles having a particle size of 50 $\mu$m or more as measured by the Microtrack method is less than 0.1%)
B-4: MC7000 (product name) (manufactured by Nissan Chemical Corporation, melamine cyanurate, D50: 1.9 $\mu$m, D99: 3.0 $\mu$m, the proportion of particles having a particle size of 50 $\mu$m or more as measured by the Microtrack method is less than 0.1%)

<Component C: Carbon black>

C-1: 650B (product name) (manufactured by Mitsubishi Chemical Corporation, particle size of 22 nm)

<Production of Insulating Flame-Retardant Resin Composition>

(Examples 1 to 9, Comparative Examples 1 to 3)

The components shown in Table 1 were premixed in each ratio shown in Table 1 and melt-kneaded at 250°C using a twin-screw extruder [TEX30$\alpha$-3, manufactured by The Japan Steel Works, Ltd.], and then pellets were produced while degassing with vacuum vent.

<Evaluation Methods>

The pellets thus obtained were dried in a hot air circulation-type dryer at 120°C for 5 hours or more, and then the respective test specimens were fabricated and evaluated by the following evaluation methods. The results are shown in Table 2.

1. Flame Retardancy

Using an injection molding machine [NEX50-5E, manufactured by NISSEI PLASTIC INDUSTRIAL CO., LTD.], 0.3 mmt test specimens (125 mm × 13 mm × 0.3 mmt) were fabricated under the conditions of a cylinder temperature of 280°C, a mold temperature of 80°C and an injection speed of 270 mm/sec. After humidity control at 23°C and 50% for 48 hours, the flame retardancy was evaluated in accordance with the UL94 test (Tests for Flammability of Plastic Materials for Parts in Devices and Appliances). Test specimens with V-0 rating were rated "Pass," and any other test specimens were rated "Fail". The UL94 classes are shown in Table 1.

Table 1

|  | V-0 | V-1 | V-2 |
|---|---|---|---|
| Residual flame time of each test specimen | 10 seconds or less | 30 seconds or less | 30 seconds or less |
| Total residual flame time of five test specimens | 50 seconds or less | 250 seconds or less | 250 seconds or less |
| Ignition of cotton due to drip | None | None | Cotton ignited |

2. Tracking Resistance

Tracking resistance was evaluated by the following method. There is a need to pass Tracking Resistance I, and it is preferable to pass Tracking Resistance II.

1) Tracking Resistance I

Using an injection molding machine [ROBOSHOT α-S100iA, manufactured by FANUC CORPORATION], 2 mmt test specimens (50 mm × 90 mm × 2 mmt) were fabricated by molding at a cylinder temperature of 260°C and a mold temperature of 65°C. In a state where two test specimens are laid one upon another, a voltage of 600V was applied using a tracking resistance tester [model YST-112, manufactured by Yamayo Measuring Tools Co., Ltd.], and an aqueous 0.1% solution of ammonium chloride was dropped every 30 seconds. Test specimens in which no tracking occurred after 100 drops were rated "Pass", while test specimens in which tracking occurred were rated "Fail".

2) Tracking Resistance II

Using an injection molding machine [ROBOSHOT α-S100iA, manufactured by FANUC CORPORATION], 3mmt test specimens (50 mm × 90 mm × 3 mmt) were fabricated by molding at a cylinder temperature of 260°C and a mold temperature of 65°C. Using a tracking resistance tester [model YST-112, manufactured by Yamayo Measuring Tools Co., Ltd.], the measurement was carried out in accordance with ASTM D3638:2021. That is, a voltage of 300 V to 600 V was applied at intervals of 25 V, and an aqueous 0.1% solution of ammonium chloride was dropped every 30 seconds at each voltage. Then, the applied voltage at which no tracking occurs for 50 or more drops was calculated. Test specimens with an applied voltage of 600 V at which no tracking occurred were rated "Pass", while test specimens with an applied voltage of lower than 600 V at which no tracking occurred were rated "Fail .

3. Mold Releasability

Using an injection molding machine [ROBOSHOT α-S100iA, manufactured by FANUC CORPORATION], 2 mmt test specimens (50 mm × 90 mm × 2 mmt) were molded at a cylinder temperature of 260°C and a mold temperature of 65°C. Test specimens in which no cracks occurred in the molded article or sprue when released from the mold were rated "Good", while test specimens in which cracks occurred and it is difficult to release from the mold were rated "Poor".

4. Thermal Stability

Using an injection molding machine [ROBOSHOT α-S100iA, manufactured by FANUC CORPORATION], after the material was allowed to dwell at a cylinder temperature of 260°C and a mold temperature of 60°C for 10 minutes, five 2 mmt test specimens (50 mm × 90 mm × 2 mmt) were fabricated by molding, and silver in five test specimens was visually inspected and judged according to the following criteria.

Good: The number of sheets with the generation of silver is 2 or less and the silver generation area is less than 200 mm$^2$ in all molded articles.

Poor: The number of sheets with the generation of silver is 3 or more and the silver generation area is 200 mm$^2$ or more in any one of molded articles.

Table 2

| | | | Example | | | | | | | | | Comparative Example | | |
|---|---|---|---|---|---|---|---|---|---|---|---|---|---|---|
| | | | 1 | 2 | 3 | 4 | 5 | 6 | 7 | 8 | 9 | 1 | 2 | 3 |
| Component A | A-1 | | 100 | | | | | | | | | | | |
| | A-2 | | | 100 | | | | | | | | | | |
| | A-3 | | | | 100 | 100 | 100 | 100 | 100 | 100 | 100 | 100 | 100 | 100 |
| Component B | B-1 | | 1.2 | 1.2 | 1.2 | 0.5 | 1.8 | 1.2 | 1.2 | | | | 2.1 | |
| | B-2 | | | | | | | | | | | | | 1.2 |
| | B-3 | | | | | | | | | 0.9 | | | | |
| | B-4 | | | | | | | | | | 0.9 | | | |
| Component C | C-1 | | 1.6 | 1.6 | 1.6 | 1.6 | 1.6 | | 1.8 | 0.08 | 0.08 | 1.6 | 1.6 | 1.6 |
| Flame retardancy | | | Pass | Pass | Pass | Pass | Pass | Pass | Pass | Pass | Pass | Fail | Fail | Fail |
| Tracking resistance I | | | Pass | Pass | Pass | Pass | Pass | Pass | Pass | Pass | Pass | Pass | Pass | Fail |
| Tracking resistance II | | | Fail | Fail | Fail | Fail | Fail | Pass | Fail | Pass | Pass | Fail | Fail | Fail |
| Mold releasability | | | Good | Good | Good | Good | Good | Good | Good | Good | Good | Good | Good | Good |
| Thermal stability | | | Good | Good | Good | Good | Good | Good | Good | Good | Good | Good | Poor | Good |

As shown in Table 2, according to the present invention, it is possible to provide an insulating flame-retardant resin composition which is excellent in flame retardancy, tracking resistance, mold releasability and thermal stability.

INDUSTRIAL APPLICABILITY

The molded article and sheet made from the insulating flame-retardant resin composition of the present invention is suitable for various uses, including automobile and battery peripheral parts.

**Claims**

1. An insulating flame-retardant resin composition comprising 0.5 to 1.8 parts by weight of (B) a flame retardant (component B) relative to 100 parts by weight of (A) a polycarbonate resin (component A), wherein the flame retardant is a nitrogen-containing compound.

2. The insulating flame-retardant resin composition according to claim 1, wherein the nitrogen-containing compound is melamine cyanurate.

3. The insulating flame-retardant resin composition according to claim 1 or 2, further comprising 0.05 to 1.8 parts by weight of (C) carbon black (component C) relative to 100 parts by weight of the component A.

4. The insulating flame-retardant resin composition according to claim 1 or 2, wherein the component A has a viscosity-average molecular weight of 17,000 to 25,500.

5. The insulating flame-retardant resin composition according to claim 1 or 2, wherein the component B is a nitrogen-containing compound in which the proportion of particles having a particle size of 50 $\mu$m or more as measured by the Microtrac method is less than 0.1%.

6. A molded article or sheet obtained by molding the insulating flame-retardant resin composition according to claim 1 or 2.

## INTERNATIONAL SEARCH REPORT

| International application No. |
|---|
| **PCT/JP2024/022342** |

### A. CLASSIFICATION OF SUBJECT MATTER

*C08L 69/00*(2006.01)i; *C08J 5/18*(2006.01)i; *C08K 3/04*(2006.01)i; *C08K 5/3477*(2006.01)i
FI:   C08L69/00; C08K5/3477; C08K3/04; C08J5/18 CFD

According to International Patent Classification (IPC) or to both national classification and IPC

### B. FIELDS SEARCHED

Minimum documentation searched (classification system followed by classification symbols)

C08L69/00; C08J5/18; C08K3/04; C08K5/3477

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2011/154992 A1 (SUMITOMO BAKELITE CO., LTD.) 15 December 2011 (2011-12-15) | 1-6 |
| A | JP 2012-172108 A (SUMITOMO BAKELITE CO., LTD.) 10 September 2012 (2012-09-10) | 1-6 |
| A | JP 2012-246471 A (SUMITOMO BAKELITE CO., LTD.) 13 December 2012 (2012-12-13) | 1-6 |
| A | JP 2010-126541 A (SUMITOMO BAKELITE CO., LTD.) 10 June 2010 (2010-06-10) | 1-6 |
| A | JP 2000-160036 A (TORAY INDUSTRIES, INC.) 13 June 2000 (2000-06-13) | 1-6 |
| A | JP 2017-226767 A (SUMIKA POLYCARBONATE LTD.) 28 December 2017 (2017-12-28) | 1-6 |
| A | JP 2001-354844 A (OTSUKA CHEMICAL CO., LTD.) 25 December 2001 (2001-12-25) | 1-6 |
| A | JP 2008-303320 A (SUMITOMO BAKELITE CO., LTD.) 18 December 2008 (2008-12-18) | 1-6 |
| A | JP 04-153257 A (MITSUBISHI PETROCHEMICAL CO.) 26 May 1992 (1992-05-26) | 1-6 |

☑ Further documents are listed in the continuation of Box C.          ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 July 2024** | **13 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**

| International application No. |
| --- |
| **PCT/JP2024/022342** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 111040409 A (ANHUI YIMAI COMMUNICATION TECH CO., LTD.) 21 April 2020 (2020-04-21) | 1-6 |
| A | JP 2016-113445 A (ADEKA CORP.) 23 June 2016 (2016-06-23) | 1-6 |
| A | JP 2015-502421 A (BASF SE) 22 January 2015 (2015-01-22) | 1-6 |

Form PCT/ISA/210 (second sheet) (July 2022)

# EP 4 748 888 A1

## INTERNATIONAL SEARCH REPORT
### Information on patent family members

International application No.

**PCT/JP2024/022342**

| Patent document cited in search report | | | Publication date (day/month/year) | Patent family member(s) | | | Publication date (day/month/year) |
|---|---|---|---|---|---|---|---|
| WO | 2011/154992 | A1 | 15 December 2011 | CN | 102985487 | A | |
| JP | 2012-172108 | A | 10 September 2012 | (Family: none) | | | |
| JP | 2012-246471 | A | 13 December 2012 | (Family: none) | | | |
| JP | 2010-126541 | A | 10 June 2010 | (Family: none) | | | |
| JP | 2000-160036 | A | 13 June 2000 | (Family: none) | | | |
| JP | 2017-226767 | A | 28 December 2017 | (Family: none) | | | |
| JP | 2001-354844 | A | 25 December 2001 | (Family: none) | | | |
| JP | 2008-303320 | A | 18 December 2008 | (Family: none) | | | |
| JP | 04-153257 | A | 26 May 1992 | (Family: none) | | | |
| CN | 111040409 | A | 21 April 2020 | (Family: none) | | | |
| JP | 2016-113445 | A | 23 June 2016 | WO | 2016/093108 | A1 | |
| | | | | US | 2017/0327475 | A1 | |
| | | | | EP | 3231794 | A1 | |
| | | | | CN | 107001291 | A | |
| | | | | KR | 10-2017-0093787 | A | |
| | | | | TW | 201623289 | A | |
| JP | 2015-502421 | A | 22 January 2015 | WO | 2013/068437 | A2 | |
| | | | | US | 2014/0316032 | A1 | |
| | | | | EP | 2776499 | A2 | |
| | | | | KR | 10-2014-0097335 | A | |
| | | | | CN | 103930478 | A | |

Form PCT/ISA/210 (patent family annex) (July 2022)

12

# EP 4 748 888 A1

**REFERENCES CITED IN THE DESCRIPTION**

**Patent documents cited in the description**

- JP 2000154322 A
- JP 2002030209 A
- JP 2002226694 A